# EUROPEAN PATENT APPLICATION

(11) **EP 0 881 587 A2**
(43) Date of publication of application: **02.12.1998**
(21) Application number: 98304129.4
(22) Date of filing: 26.05.1998
(51) Int. Cl.: G06F 17/60, G06F 17/22, H04L 12/58

(54) **Remote file creation using E-mail**

(30) Priority: 28.05.1997 JP 138044/97
(71) Applicant: INTERNATIONAL BUSINESS MACHINES CORPORATION, Armonk, NY 10504 (US)
(72) Inventor: Satoh, Kenichi, Yokohama-shi, Kanagawa-ken (JP); Shioya, Masahiro, Sagamihara-shi, Kanagawa-ken (JP); Nishida, Noriko, Sagamihara-shi, Kanagawa-ken (JP)
(74) Representative: Waldner, Philip

(57) **Abstract**

E-mail sent from the remote terminals 211, 213 or 215 describes a path name, a directory name and a file name of a file to be generated on a proxy server 200, together with contents of the file to be generated. Upon receipt of this E-mail, the proxy server 200 analyzes this mail, and generates the file which contains the portion interposed between two keywords, with the designated path name, directory name and file name. In another aspect of this invention, E-mail describes a file name or the like of a file to be obtained from the proxy server 200, together with associated keywords. The proxy server 200 converts this file into E-mail format, and sends it to a requestor or another designated recipient.

## Description

This invention relates to a method of information processing and, more particularly, to a method of creating a file by using an electronic mail, hereafter called "E-mail".

To automatically generate a file on another terminal at a remote location based on E-mail data that exists in a sending remote terminal, it has been necessary to create a file at the sending remote terminal and to subsequently send the file to another terminal. Thus, the sending remote terminal has necessitated a system for handling files.

Similarly, to obtain a file stored on another terminal at a remote location, it has been necessary to have this file transferred from another terminal in a file format. Thus, a file receiving terminal has necessitated a system for handling files as well.

In case that such a system for handling files is prerequisite to a remote terminal, the remote terminal has necessitated given resources such as memory areas or the like. For a mobile type terminal in particular, such a requirement has been possible obstacles to its size and price reduction.

Further, even where a system for handling files is provided at a sending remote terminal, in order to generate a file on a receiving terminal at a remote location based on E-mail data that exists in the sending remote terminal, it has been necessary either to convert the data into a file at the sending side and then to send the file. or to send the data in E-mail format and to subsequently convert the E-mail data into a file at the receiving side, with operator's intervention.

Moreover, even where a system for handling files is provided at a sending remote terminal, it will be convenient if different types of files can be managed in a unified E-mail format, since this will not only lead to reduction in the number of applications to be installed in the sending remote terminal or a receiving terminal, but also lead to reduction of amounts of resources required.

Further, it is noted that some devices having limited amounts of available resources are now widely used in the marketplace. Typical examples are: "DataScope" and "Pinocchio" made by Kyocera and Panasonic respectively, each having combined telephone/display functions and transmitting/receiving functions of E-mails only. While these devices are unable to handle files, it has been desired to use such a device for performing complex works.

The aforementioned problems of the prior art have been also encountered in the field of agent technology, as described in "Mobile Computer Agent, VersionJ1.1", Version 3, October 1996, IBM Japan (Form No. SC88-3162-00), and Japanese Patent Publications identified as "Tokkai hei 7-182174" and "Tokuhyo hei 7-509799" respectively.

While not publicly available at filing of the present application, there is another technique for sending E-mail (which describes mail keywords including: agent identification information for identifying a mobile agent to be generated on a proxy server; and template modification information for controlling process contents of the mobile agent to be generated) from a remote terminal to the proxy server, whereby the proxy server generates the mobile agent based on the template that is modified in accordance with the keywords described in the received E-mail, executes the mobile agent, converts its processed result into E-mail format, and sends it back.

In carrying out such processing, it has been desired that the agent is allowed to designate a file to be used for its processing, or the agent is allowed to send a file to another location under certain conditions to be determined by the agent. In such a case, there has been an associated requirement to generate a desired file on a receiving side under the control of an instruction from a sending side.

It is, therefore, an object of the embodiment of the invention to provide a system that is capable of automatically generating a file on another terminal at a remote location by solely using the presently installed E-mail system, even where a sending remote terminal is unable to handle a file.

It is another such object to provide a system that is capable of making reference to a file on another terminal at a remote location by solely using the presently installed E-mail system, even where a sending/receiving remote terminal is unable to handle a file.

It is another such object to provide a system that is capable of automatically generating a file on another terminal at a remote location, even where a sending terminal is provided with a small storage capacity.

It is another such object to provide a system that is capable of obtaining a file on another terminal at a remote location, even where a sending/receiving terminal is provided with a small storage capacity.

It is another such object to provide a system that, in case of controlling a file at a remote location, reduces inputs required at a remote terminal.

It is another such object to provide a system that reduces amounts of data to be communicated between a sending terminal and a receiving terminal.

It is another such object to provide a system that eliminates operator's efforts at a remotely located terminal.

It is another such object to provide a remote operation system that, in case of remotely operating a terminal at a remote location, is capable of performing a variety of remote operations desired by a user.

It is another such object to provide a remote operation system that, in case of remotely operating a terminal at a remote location, is capable of dynamically modifying and executing remote operations currently desired by a user.

It is another such object to provide a system that automatically generates a file cn another terminal at a remote location by solely using the presently available generic E-mail software rather than any special software.

It is another such object to provide a system that obtains a file on another terminal at a remote location by solely using the presently available generic E-mail software rather than any special software.

It is another such object to provide a system that automatically generates a file on another terminal at a remote location without regard to a platform of a remote terminal for originating a processing request.

It is another such object to provide a system that obtains a file on another terminal at a remote location without regard to a platform of a remote terminal for originating a processing request.

E-mail is sent from a remote terminal, such as "Smartphone", PDA or the like, to a proxy server. This E-mail describes a path name, a directory name and a file name of a file to be generated on the proxy server. Further, this E-mail describes a content of the file to be generated, which is interposed between two keywords indicating a head and a tail of the content of the file respectively.

Upon receipt of this E-mail, the proxy server analyzes the content of this E-mail, and generates a file having the content interposed between the two keywords, with the designated path name, directory name and file name.

According to one aspect of the invention there is provided a method in an information processing apparatus connected to a network, of processing a file based on a received electronic mail, the method comprising the steps of:
(a) recognizing arrival of said electronic mail at said information processing apparatus;
(b) analyzing said electronic mail for specifying a file name and file contents data identified by a file generating keyword; and
(c) performing a file operation on a file having said specified file name as its file name.

Preferably said file operation comprises one or more of the following:
(i) saving a file having said specified file contents data as its contents and said specified file name as its file name;
(ii) generating a file having said specified file contents data as its contents and said specified file name as its file name, and executing said application program by using said generated thought;
(iii) searching for a file corresponding with said file name, and adding said file contents data to said searched file;
(iv) deleting a file corresponding with said specified file name; and
(v) generating an electronic mail containing at least a portion of data in a file which corresponds with said searched file name, and sending said generated electronic mail.

According to another aspect of the invention there is provided an information processing apparatus connected to a network for processing a file based on a received electronic mail, comprising:
(a) electronic mail recognition means for recognizing arrival of said electronic mail at said information processing apparatus; and
(b) mail interpreter means for analyzing said electronic mail to specify a file name and file contents data identified by a file generating keyword, and for saving a file having said specified file contents data as its contents and said specified file name as its file name;
(c) means for performing a file operation on a file having said specified file name as its file name.

According to another aspect of the invention there is provided a storage medium for storing an information processing program executable in an information processing apparatus which is connected to a network for processing a file based on a received electronic mail, the information processing program comprising:
(a) program code for causing said information processing apparatus to recognize arrival of said electronic mail at said information processing apparatus;
(b) program code for causing said information processing apparatus to specify a file name and file contents data identified by a file generating keyword; and
(c) program code for causing said information processing apparatus to perform a file operation on a file having said specified file name as its file name.

In another aspect of this invention, E-mail describes a path name, a directory name and a file name of a file to be obtained from the proxy server, in addition to the keywords. Upon receipt of this E-mail, the proxy server analyzes the content of this E-mail, searches for a file having the path name, the directory name and the file name described in association with the keywords, converts this file into E-mail format, and sends this to a requestor or another designated recipient.

In one aspect of this invention, there is provided in an information processing apparatus connected to a network, a method cf processing a file based on a received E-mail, comprising the steps of:
(a) recognizing arrival of said E-mail at said information processing apparatus;
(b) analyzing said E-mail for specifying a file name and file contents data identified by a file generating keyword; and
(c) saving a file having said specified file contents data as its contents and said specified file name as its file name.

In another aspect of this invention, there is provided in an information processing apparatus connected to a network for executing an application program, a method of information processing, comprising the steps of:
(a) recognizing arrival of E-mail at said information processing apparatus;
(b) analyzing said E-mail for specifying a file name and file contents data identified by a file generating keyword;
(c) generating a file having said specified file contents data as its contents and said specified file name as its file name; and
(d) executing said application program by using said generated file.

In another aspect of this invention, there is provided in an information processing apparatus connected to a network, a method of processing a file based on a received E-mail, comprising the steps of:
(a) recognizing arrival of said E-mail at said information processing apparatus;
(b) analyzing said E-mail for specifying a file name and file contents data identified by a file adding keyword;
(c) searching for a file corresponding with said file name; and
(d) adding said file contents data to said searched file.

In another aspect of this invention, there is provided in an information processing apparatus connected to a network, a method of processing a file based on a received E-mail, comprising the steps of:
(a) recognizing arrival of said E-mail at said information processing apparatus;
(b) analyzing said E-mail for specifying a file name identified by a file deleting keyword; and
(c) deleting a file corresponding with said specified file name.

In another aspect of this invention, there is provided in an information processing apparatus connected to a network, a method of processing a file based on a received E-mail, comprising the steps of:
(a) recognizing arrival of said E-mail at said information processing apparatus;
(b) analyzing said E-mail for specifying a file name identified by a file referencing keyword;
(c) searching for a file corresponding with said file name;
(d) generating E-mail containing at least a portion of data in a file which corresponds with said searched file name; and
(e) sending said generated E-mail.

In another aspect of this invention, there is provided an information processing apparatus connected to a network for processing a file based on a received E-mail, comprising:
(a) E-mail recognition means for recognizing arrival of said E-mail at said information processing apparatus; and
(b) mail interpreter means for analyzing said E-mail to specify a file name and file contents data identified by a file generating keyword, and for saving a file having said specified file contents data as its contents and said specified file name as its file name.

In another aspect of this invention, there is provided an information processing apparatus connected to a network for processing a file based on a received E-mail, comprising:
(a) E-mail recognition means for recognizing arrival of E-mail at said information processing apparatus;
(b) mail interpreter means for analyzing said E-mail to specify a file name and file contents data identified by a file generating keyword, and for generating a file having said specified file contents data as its contents and said specified file name as its file name; and
(d) program execution means for executing said application program by using said generated file.

In another aspect of this invention, there is provided an information processing apparatus connected to a network for processing a file based on a received E-mail, comprising:
(a) E-mail recognition means for recognizing arrival of E-mail at said information processing apparatus; and
(b) mail interpreter means for analyzing said E-mail to specify a file name and file contents data identified by a file adding keyword, for searching for a file corresponding with said file name, and for adding said file contents data to said searched file.

In another aspect of this invention, there is provided an information processing apparatus connected to a network for processing a file based on a received E-mail, comprising:
(a) E-mail recognition means for recognizing arrival of E-mail at said information processing apparatus; and
(b) mail interpreter means for analyzing said E-mail to specify a file name and file contents data identified by a file deleting keyword, and for deleting a file corresponding with said specified file name.

In another aspect of this invention, there is provided an information processing apparatus connected to a network for processing a file based on a received E-mail, comprising:
(a) mail processing means for recognizing arrival of E-mail at said information processing apparatus; and
(b) mail interpreter means for analyzing said E-mail to specify a file name and file contents data identified by a file referencing keyword, and for searching for a file corresponding with said specified file name; wherein said mail processing means generates E-mail containing at least a portion of data in a file which corresponds with said searched file name, and sends said generated E-mail.

In another aspect of this invention, there is provided a storage medium for storing an information processing program executable in an information processing apparatus which is connected to a network for processing a file based on a received E-mail, the information processing program comprising:
(a) program code for causing said information processing apparatus to recognize arrival of said E-mail at said information processing apparatus;
(b) program code for causing said information processing apparatus to specify a file name and file contents data identified by a file generating keyword; and
(c) program code for causing said information processing apparatus to save a file having said specified file contents data as its contents and said specified file name as its file name.

In another aspect of this invention, there is provided a storage medium for storing an information processing program executable in an information processing apparatus which is connected to a network for executing an application program, the information processing program comprising:
(a) program code for causing said information processing apparatus to recognize arrival of E-mail at said information processing apparatus;
(b) program code for causing said information processing apparatus to specify a file name and file contents data identified by a file generating keyword;
(c) program code for causing said information processing apparatus to generate a file having said specified file contents data as its contents and said specified file name as its file name; and
(d) program code for causing said information processing apparatus to execute said application program by using said generated file.

In another aspect of this invention, there is provided a storage medium for storing an information processing program executable in an information processing apparatus which is connected to a network for processing a file based on a received E-mail, the information processing program comprising:
(a) program code for causing said information processing apparatus to recognize arrival of E-mail at said information processing apparatus;
(b) program code for causing said information processing apparatus to specify a file name and file contents data identified by a file adding keyword;
(c) program code for causing said information processing apparatus to search for a file corresponding with said file name; and
(d) program code for causing said information processing apparatus to add said file contents data to said searched file.

In another aspect of this invention, there is provided a storage medium for storing an information processing program executable in an information processing apparatus which is connected to a network for processing a file based on a received E-mail, the information processing program comprising:
(a) program code for causing said information processing apparatus to recognize arrival of E-mail at said information processing apparatus;
(b) program code for causing said information processing apparatus to specify a file name and file contents data identified by a file deleting keyword; and
(c) program code for causing said information processing apparatus to delete a file corresponding with said specified file name.

In another aspect of this invention, there is provided a storage medium for storing an information processing program executable in an information processing apparatus which is connected to a network for processing a file based on a received E-mail, the information processing program comprising:
(a) program code for causing said information processing apparatus to recognize arrival of E-mail at said information processing apparatus; (b) program code for causing said information processing apparatus to specify a file name and file contents data identified by a file referencing keyword;
(c) program code for causing said information processing apparatus to search for a file corresponding with said file name;
(d) program code for causing said information processing apparatus to generate E-mail containing at least a portion of data in a file which corresponds with said searched file name; and
(e) program code for causing said information processing apparatus to send said generated E-mail.

This and other aspects of the present invention will now be described, by way of example only, and with reference to the following figures, in which:
Fig. 1 is a block diagram showing an embodiment of hardware configuration of a proxy server or a remote terminal in accordance with this invention.
Fig. 2 is a diagram showing an operating state of an embodiment of this invention,
Fig. 3 is a block diagram showing a structure of a mail handler in a preferred embodiment of this invention.

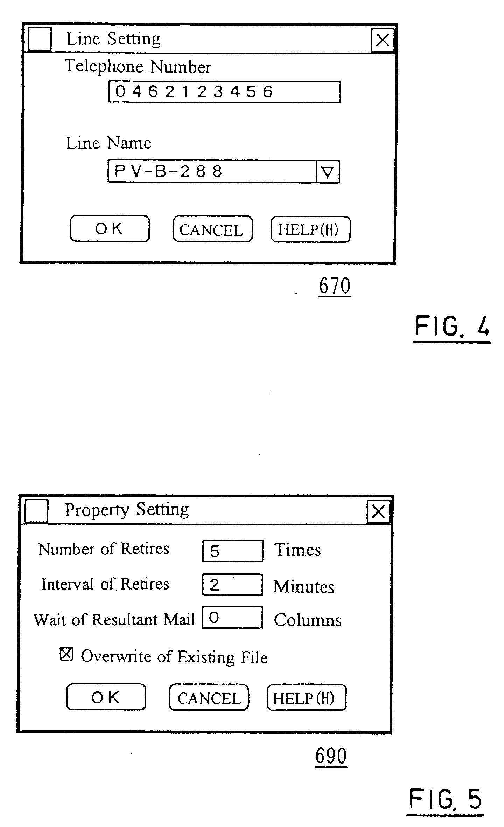

Fig. 4 is a diagram showing a user interface for line setting in a preferred embodiment of this invention.
Fig. 5 is a diagram showing a user interface for property setting in a preferred embodiment of this invention.
Fig. 6 is a diagram showing a user interface for registration of a user in a preferred embodiment of this invention.
Fig. 7 is a diagram showing a user interface for registration of a user in a preferred embodiment of this invention.
Fig. 8 is a diagram showing an operating state of an embodiment of this invention,
Fig. 9 is a flow chart showing procedures in a preferred embodiment of this invention, covering from receipt of E-mail,
generation/deletion of files, up to transmission of file contents.
Fig. 10 is a flow chart showing a procedure for file processing in a preferred embodiment of this invention,

### A. Hardware Configuration

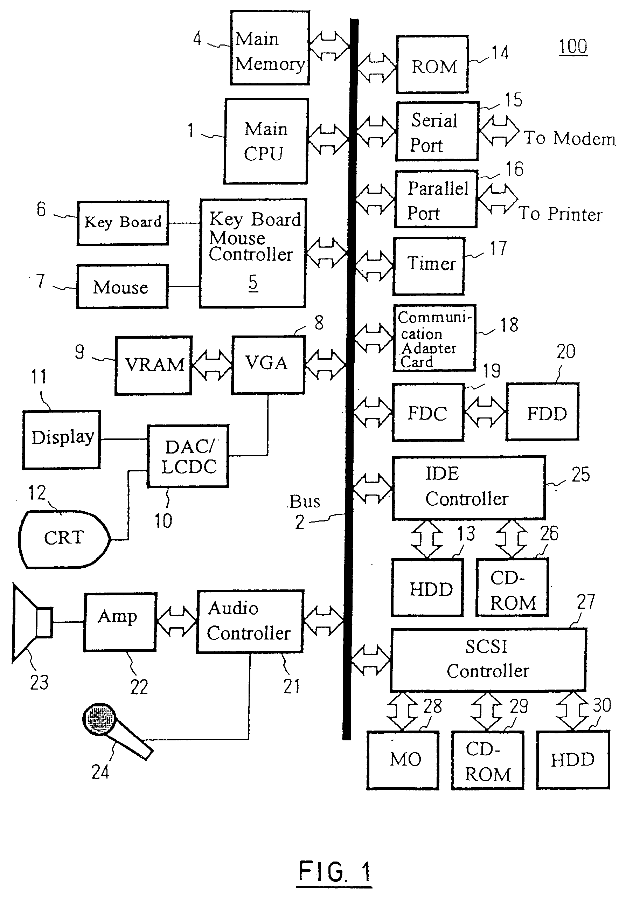

Now, with reference to the drawings, an embodiment of this invention will be described. Referring to Fig. 1, there is schematically shown an embodiment of hardware configuration of a proxy server 100 to be used in this invention. The proxy server 100 includes a central processing unit (CPU) 1 and a memory 4. CPU 1 and the memory 4 are connected to a hard disk drive 13 via a bus 2. A floppy disk drive (or another storage medium drive such as a MO drive, a CD-ROM drive and the like) 20 is connected to the bus 2 via a floppy disk controller 19 (or an IDE controller, a SCSI controller and the like).

A floppy disk (or another storage medium such as an MO disk, a CD-ROM and the like) inserted into the floppy disk drive (or another storage medium drive such as an MO drive, a CD-ROM drive and the like) 20, the hard disk drive 13 and/or a ROM 14 store a computer program code for practising this invention. At the time of execution, this computer program code is loaded into the memory 4 such that it cooperates with an operating system to provide instructions to CPU and the like. This computer program code may be compressed or divided into a plurality of segments for storing onto a plurality of mediums.

Further, the proxy server 100 is provided with user interface hardware, including a pointing device (such as a mouse, joystick and the like) 7 or a keyboard 6 for input entry, as well as a display 12 for presenting visual data to a user. Also, a printer and a modem may be connected via a parallel port 16 and a serial port 15 respectively. The proxy server 100 may be connected to a network via the serial port 15 and a modem or a communication adapter 18 (Ethernet or token ring card) for communicating with other computers and the like.

A speaker 23 receives audio signals that are D/A (digital/ analog) converted by an audio controller 21 via an amplifier 22, and outputs the audio signals as sounds. Also, the audio controller 21 may perform an A/D conversion of audio information received from a microphone 24, thereby to capture the external audio information into the system.

Thus, it will be readily understood from the foregoing that the proxy server 100 of this invention may be implemented by a conventional personal computer (PC), a workstation, a main frame, a notebook PC, a palm top PC, a communication terminal having communication functions including a network computer or the like, and any combinations thereof. Note, however, that these elements are listed for exemplification purpose only, and all of these elements are not necessarily equated with essential elements of this invention.

In particular, since the hardware configuration explained here is required for executing a program designated by a user, those elements listed below are non-essential elements. They are: audio controller 21, amplifier 22, speaker 23 and microphone 24 used for audio processing, keyboard 6; mouse 7 and keyboard/mouse controller 5 used for direct input entry: CRT 12, a display device 11, VRAM 9 and VGA 8 used for presenting visual data to a user; and a variety of storage medium controllers 19, 25, 27 and the like.

It will be readily understood by those skilled in the art that various modifications to respective elements of this proxy server 100, including but not limited to combining a plurality of machines and distributing implemented functions among these machines, may be made without departing the spirit and scope of the concept of this invention.

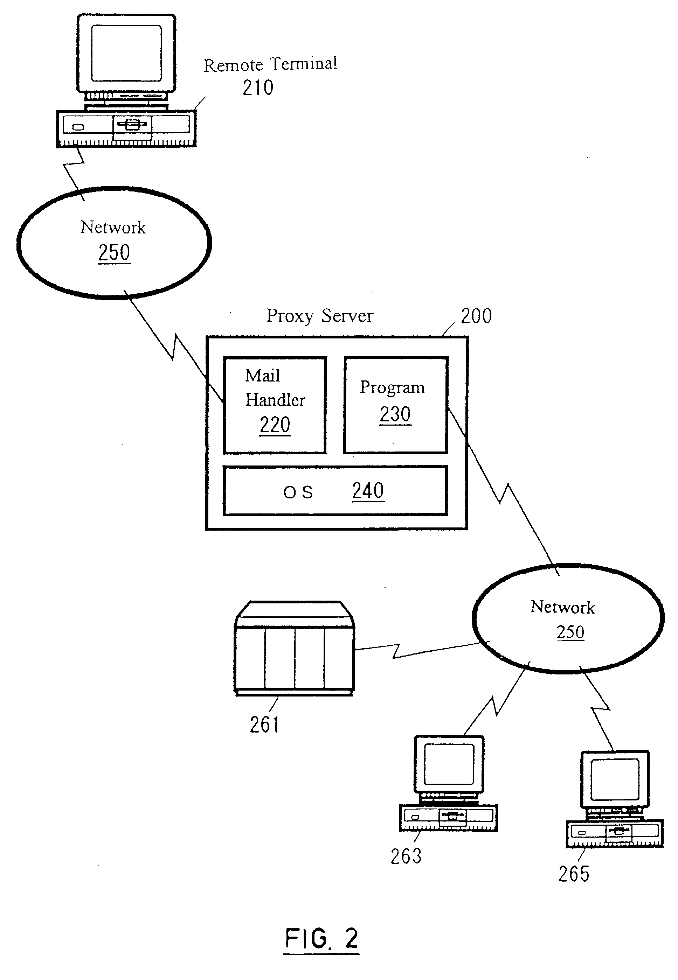

A terminal for remote operations (remote terminal 210 shown in Fig. 2) in accordance the embodiment of the invention may be implemented by the hardware configuration as shown in Fig. 1 in the same manner as the proxy server 100. That is, since the remote terminal 210 requires limited functions for entering mail keywords and originating E-mails, it will be readily understood by those skilled in the art that the remote terminal 210 may be implemented by a conventional personal computer (PC), a workstation, a notebook PC, a palm top PC, a variety of household electric appliances such as TV sets incorporating computers, a game machine having communication functions, a communication terminal having communication functions including a telephone, a FAX machine, a mobile telephone, a PHS (personal handyphone system), an electronic memorandum book or the like, and any combinations thereof.

Note, however, that these elements are listed for exemplification purpose only, and all of these elements are not necessarily equated with essential elements of this invention. In a preferred embodiment of this invention, "DataScope" and "Pinocchio" made by Kyocera and Panasonic respectively, each having combined telephone/display functions and transmitting/receiving functions of E-mails only are used as master controller and, thus, those elements listed below are not necessarily regarded as essential elements. They are: audio controller 21, amplifier 22, speaker 23 and microphone 24 used for audio processing; keyboard 6, mouse 7 and keyboard/mouse controller 5 used for direct input entry; CRT 12, a display device 11, VRAM 9 and VGA 8 used for presenting visual data to a user; and a variety of storage medium controllers 19, 25, 27 and the like.

An operating system on the proxy server 100 is not limited to a particular operating system environment and it may be implemented by: those supporting a GUI multiwindow environment such as "WindowsNT" (trademark of Microsoft Corp.), "Windows95" (trademark of Microsoft Corp.), "Windows3.X" (trademark of Microsoft Corp.), "OS/2" (trademark of IBM Corp.), "MacOS" (trademark of Apple Computer, Inc.), "X-WINDOWS system" (trademark of MIT) on "AIX" (trademark of IBM Corp.) or the like; those supporting a character base environment such as "PC-DOS" (trademark of IBM Corp.), "MS-DOS" (trademark of Microsoft Corp.) or the like; those categorized as real-time OS such as "OS/Open" (trademark of IBM Corp.), "VxWorks" (trademark of Wind River Systems, Inc.) or the like; and those embedded into a network computer such as "JavaOS" or the like.

Similarly, an operating system on the remote terminal 210 is not limited to a particular operating system environment and it may be implemented by: those supporting a GUI multiwindow environment such as "WindowsNT" (trademark of Microsoft Corp.), "Windows95" (trademark of Microsoft Corp.), "Windows3.X" (trademark of Microsoft Corp.), "OS/2" (trademark of IBM Corp.), "MacOS" (trademark of Apple Computer, Inc.), "X-WINDOWS system" (trademark of MIT) on "AIX" (trademark of IBM Corp.) or the like; those supporting a character base environment such as "PC-DOS" (trademark of IBM Corp.), "MS-DOS" (trademark of Microsoft Corp.) or the like; those categorized as real-time OS such as "OS/Open" (trademark of IBM Corp.), "VxWorks" (trademark of Wind River Systems, Inc.) or the like; those embedded into a network computer such as "JavaOS" or the like; and a chip-card OS being used in the "Smartphone" that is not capable of handling a file or the like.

### B. System Configuration

Now, with reference to a block diagram of Fig. 2, a system configuration in the preferred embodiment of this invention will be described. The remote terminal 210 is provided with communication functions of a PHS, a mobile telephone or the like, thereby to access a proxy server 200 connected to a network 250. In the preferred embodiment of this invention, a mail handler 220 and an application program 230 are running on an operating system (OS) 240 of the proxy server 200.

The mail handler 220 analyzes information content of E-mail sent from the remote terminal 210 and generates a file. The application program 230 on the proxy server 200 is capable of performing various processing by making use of this file. For example, in case that this application program 230 is a mobile agent generator program, it is capable of generating an agent which is to use this file, accessing a host computer 261, a Notes server 263 ("Notes" is a trademark of Lotus Development Corp.), a desktop PC 265 at home or the like, and obtaining information contained therein (for example, information from a customer database resident at the host, scheduling information of upper managers and internet/intranet information resident at the Notes server, materials for use in a meeting which have been prepared by the desktop at home, or the like).

Upon receipt of E-mail requesting to obtain a file, the mail handler 220 determines if there exists the designated file, and if so, converts the file into E-mail format, and then sends it to a designated recipient.

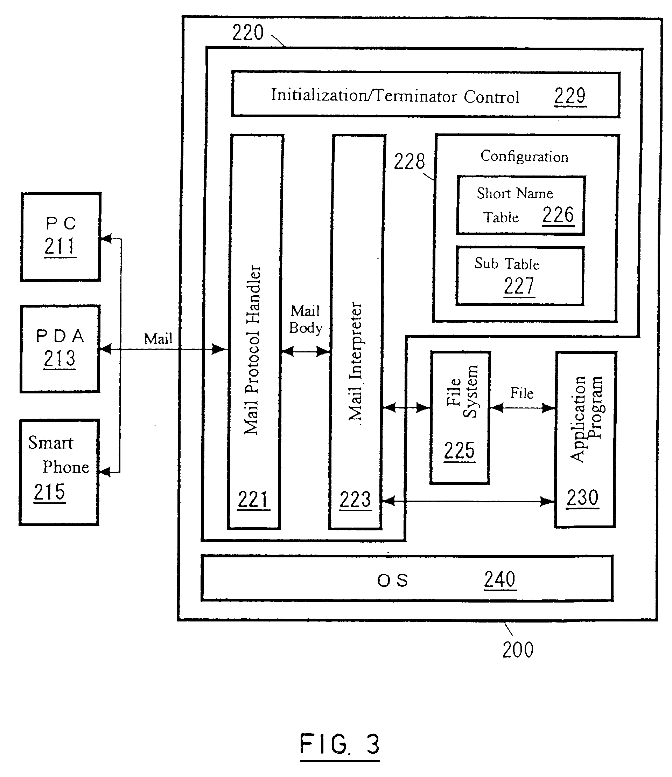

Fig. 3 is a functional block diagram showing a system configuration of the mail handler 220 in the preferred embodiment of this invention. The mail handler 220 includes a mail protocol handler 221, a mail interpreter 223 and a subscriber table 227.

Initialization/termination control 229 performs preprocessing for starting the mail handler 220, starts respective components and performs postprocessing for terminating the mail handler 220.

Configuration means 228 provides configuration information required by the mail handler 220. In the preferred embodiment of this invention, the following configuration information is provided.
1. There is stored the subscriber table 227 for registering users to be used on the mail handler 220.
   More particularly, it manages user IDs registered on the proxy server 200, destinations of transmitted mails (accessing information such as telephone numbers, E-mail addresses or the like), and passwords for authenticating the remote terminal 210.
2. It is also possible to configure a modem or a property (for example, modem settings, and optional settings for E-mail such as the number of retried transmissions). If there exists already a file to be created, it may be overwritten, or an error message may be returned.

The mail protocol handler 221 monitors E-mail sent from the remote terminal 210, and analyzes a protocol of the received E-mail. It also removes a header portion from the E-mail arrived at the mail handler 220 to extract a body portion thereof, extracts the originator information contained in the header portion, and provides the extracted ones to the mail interpreter 223. Further, it creates E-mail from the body portion and the destination information corresponding with the processed result, and sends this E-mail to the designated destination or recipient. If it is desired to process a plurality of E-mails in parallel, a plurality of mail protocol handlers 221 may be provided.

The mail interpreter 223 analyzes mail keywords written into the body portion of E-mail, performs creation/addition of a file, acquisition of a file or the like.

While respective functional blocks shown in Figs. 2 and 3 have been described above, it is noted that these functional blocks are logical functional blocks. Thus, each of the functional blocks is not necessarily implemented by bulky hardware/ software components, but it may be implemented by combined or common hardware/software components. Note also that all of the functional blocks shown in Figs. 2 and 3 are not necessarily regarded as essential elements of this invention.

### C. Preprocessing

Next, the preprocessing in the preferred embodiment of this invention will be described.

### C-1. Creation of Mail Keywords

The remote terminal 210 creates E-mail that describes mail keywords. Table 1 below shows a sample of E-mail including mail keywords in accordance with a first embodiment.

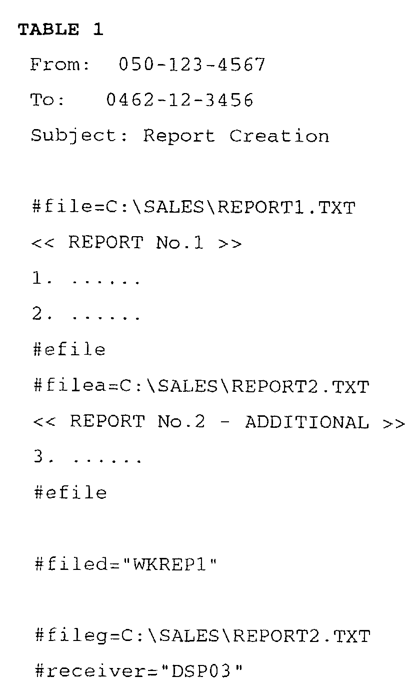

In the preferred embodiment of this invention, there are several types of mail keywords such as [#file], [#filea], [#filed], [#fileg] and the like. [#file] is a keyword for creating a new file, [#filea] is a keyword for adding data into an existing file, [#filed] is a keyword for deleting a file, and [#fileg] is a keyword for making reference to a file.

To these keywords, it is possible to designate short names registered in a short name table 226 of the configuration means 228, or to directly designate path names, directory names and file names of files resident at the proxy server 200. In the short name table 226, short names, actual file names associated therewith and security levels are managed as shown in Table 2 below.

**TABLE 2**

| Short Name | File Name | Security Level |
|---|---|---|
| REPORT1 | C:\SALES\REPORT1.TXT | 1 |
| REPORT2 | C:\SALES\REPORT2.TXT | 0 |
| REPORT3 | C:\SALES\REPORT3.TXT | 2 |
| WKREP1 | C:\WORK\REPORT1.TXT | 1 |

For example, when a short name is registered, it is possible to make a designation of [#filea="report2"] and, in case of directly designating a file name of a template, it is possible to make a designation of [#filea=C:\SALES\REPORT2.TXT]. In the preferred embodiment of this invention, there is also provided a mail keyword for registration (or for modification/ deletion) of a short name and, thus, by making a designation of [#short=report2/C:\SALES\REPORT2.TXT] for instance, it becomes possible to use the short name thereafter. Such a short name is useful in a case where entry means such as "Smartphone" or the like is limited.

[#efile] is a mail keyword for indicating an end of contents to be written.

[#receiver] is described to designate a recipient of E-mail which contains a referenced result of a file. In the absence of such designation, the referenced result is returned to the sender. To designate its recipient, his/her E-mail address or a phone number may be used. Alternatively, if the recipient is already registered in the subscriber table to be described below, its user ID may be designated like [#receiver="DSP03"].

The above described mail keywords may be represented by simple numerals, symbols or the like, since the mail handler 220 only requires information to identify their types or the like.

### C-2. Transmission of E-mail

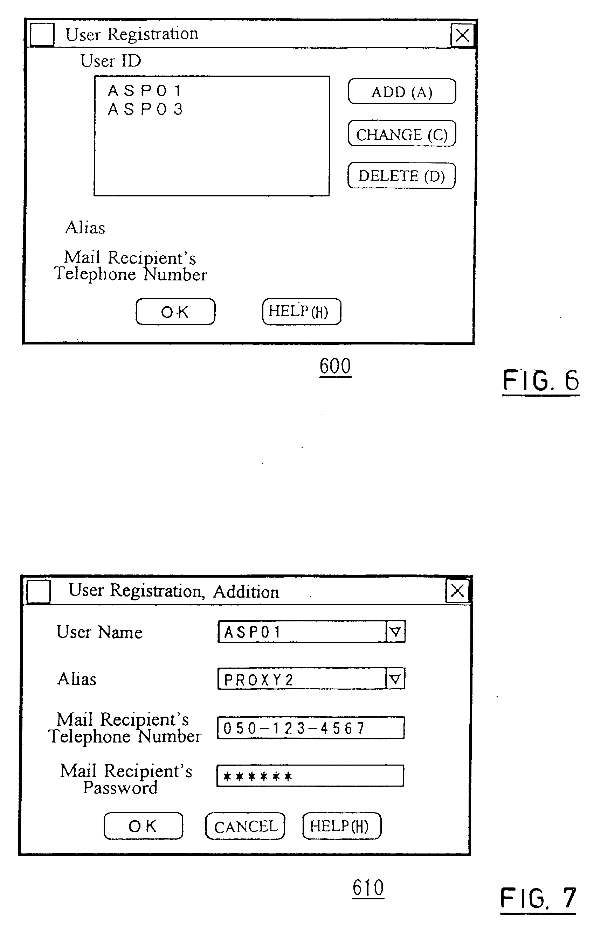

In the example below, the following assumptions are made.
(a) Let a client name of the mail handler 220 be set to MAIPROXY at its installation time.
(b) In the subscriber table 227 of the configuration means 228, let users be registered as shown in Table 3 below. In the preferred embodiment of this invention, there is provided a user interface for registration of users as shown in Figs. 6 and 7, so that a user can make his/her registration easily.

**TABLE 3**

| User ID | Recipient's Address | Recipient's Password |
|---|---|---|
| DSP01 | 050-123-4567 | DSPPASS1 |
| DSP03 | 050-234-5678 | DSPPASS3 |
| DSP04 | myid@ibm.com | DSPPASS4 |

(c) Let a telephone number of the mail handler 220 be (0462- 12-3456).
(d) Let two remote terminals be owned, wherein one remote terminal be used for sending E-mail that describes mail keywords, and another terminal be used for receiving a mail that makes reference to contents of a file. Let a telephone number and a password of this sending remote terminal be (050-123-4567) and (DAPPASS1) respectively, whereas a telephone number and a password of the receiving terminal be (050-234-5678) and (DAPPASS3) respectively.

First, the remote terminal 1 sends a mail containing mail keywords. In the example shown in Table 3, the result is sent to the remote terminal 2, having the user ID of (DSP03) and the telephone number of (050-234-5678).

Note here that [From: 050-123-4567] is the user's own telephone number, [To: 0462-12-3456] is the mail handler's telephone number, and [Subject:] contains character strings arbitrarily defined by the user.

### D. Generation/Deletion of File and Transmission of File Contents

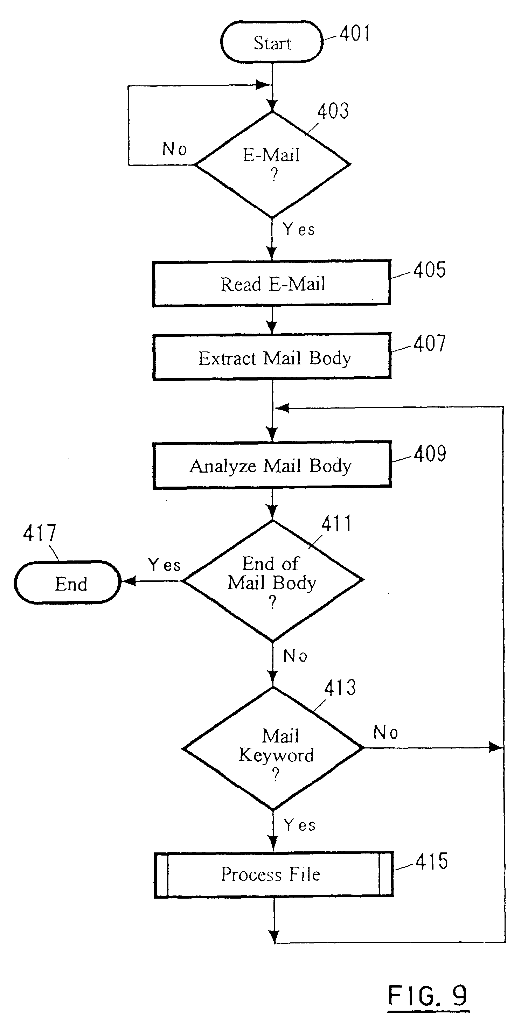

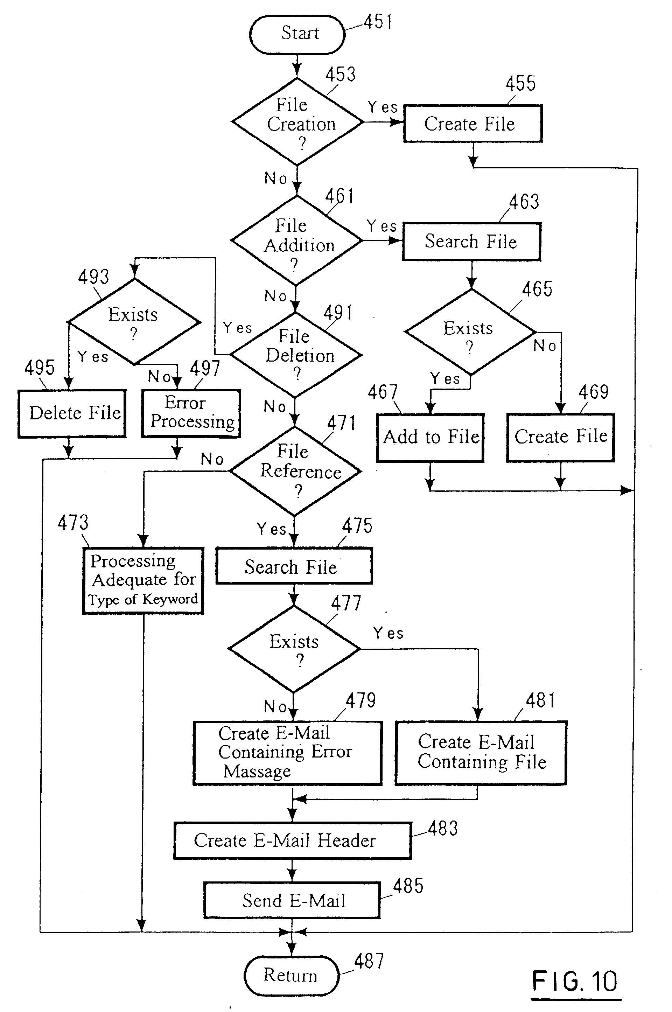

Now, with reference to the functional block diagram of Fig. 3 in addition to flow charts of Figs. 9 and 10, a sequence of procedures in the preferred embodiment of this invention (which cover from receipt of E-mail, generation/deletion of a file, up to transmission of file contents) will be described.

The mail protocol handler 221 of the mail handler 220 monitors arrival of E-mail (block 403). E-mail sent from the remote terminals 211, 213 or 215 is analyzed by the mail protocol handler 221 for a required protocol, and processed thereby. Further, the signals sent to the proxy server 200 are converted into a file in the form of E-mail.

In the preferred embodiment of this invention, the mail protocol handler 221 performs an authentication, prior to receiving a mail from the remote terminal 210. In this case, the password (DSPPASS1) corresponding to the telephone number (050-123-4567) of the remote terminal 210 is used to determine if it is registered in the subscriber table 227 of the configuration means 228.

After such an authentication has been done, the mail protocol handler 221 reads E-mail (block 405), removes a header portion from the E-mail to extract its body portion, extracts originator information contained in the header portion, and provides the extracted ones to the mail interpreter 223 (block 407).

Next, the mail interpreter 223 of the mail handler 220 analyzes those keywords written into the received body portion (block 409). If a mail keyword is detected, a file is processed (block 415).

Fig. 10 is a flow chart showing a detailed procedure for processing a file (block 415).

If the mail keyword [#file] is detected, the mail interpreter 223 determines that this is a keyword for creating a new file, and writes data as a file until [#efile] is detected (blocks 453, 455). Its file name is designated by a character string following [#file=]. In the preferred embodiment of this invention, a file is generated in a text format, but it is possible to generate a text of a desired format by using a known conversion technique. Further, while a scheme adopted in the preferred embodiment of this invention is such that each E-mail is allowed to contain a plurality of mail keywords, if such a scheme is not adopted, there is no need to use [#efile] for indicating an end of file contents data and, thus, it is possible in this case to delimit the file contents data until an end of E-mail or a preset extent. Moreover, if another scheme is adopted for always limiting the number of mail keywords contained in each E-mail to only one, it is possible to describe such a mail keyword in [Subject:] portion rather than the body portion.

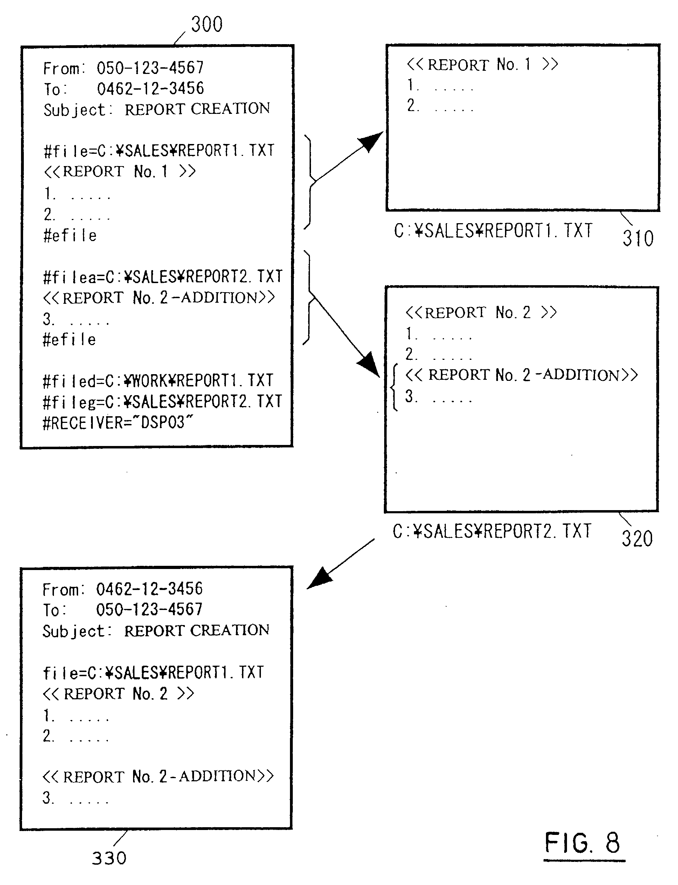

As shown in Fig. 8, in the example of Table 1, a file 310 is created as [C:\SALES\REPORT1.TXT]. In the preferred embodiment of this invention, if certain error conditions are encountered, that is, if [#efile] is not detected subsequent to [#file] or the like, error processing will follow.

If the mail keyword [#filea] is detected, the mail interpreter 223 determines that this is a keyword for addition to a file, and searches for the designated file (block 465). If there exists the designated file, data is added to the end of this file until [#efile] is detected (block 467). In the example of Table 1, as shown in Fig. 8, data is added to the end of the file 320.

On the other hand, if the designated file does not exist, a new file is created (block 469), in the same manner as [#file],

If the mail keyword [#filed] is detected, the mail interpreter 223 determines that this is a keyword for deleting a file, and searches for the designated file (block 493). If there exists the designated file, this file is deleted (block 495). In the example of Table 1, [C:\SALES\REPORT1.TXT] is deleted. On the other hand, if the designated file does not exist, error processing is carried out (block 497).

If the mail keyword [#fileg] is detected, the mail interpreter 223 determines that this is a mail keyword for making reference to a file, and searches for the designated file (block 475). If there exists the designated file, this file is passed to the mail protocol handler 221. From the mail interpreter 223, the mail protocol handler 221 obtains a telephone number of the receiving remote terminal 2 together with a body portion of a mail, creates a header portion of a mail, and creates a mail by appending thereto the body portion (block 483).

Here, on the basis of the mail keyword designated as [#RECEIVER="DSP03"], [050-234-5678] is used as the recipient's telephone number, and [DSPPASS3] is used for authentication. The mail protocol handler 221 converts the mail into a required protocol and then sends it to the remote terminal 2 (block 485). In the example of Table 1, as shown in Fig. 8, the E-mail 330 to be transmitted contains the file 320 (C:\SALES\REPORT2.TXT) as its body.

File data contained in a mail as its body portion may be converted such that the remote terminal is capable of readily handling it. For example, it is possible to perform translation or layout modification, to extract essential portions of a document such as a headline or the like, to delete excessive data beyond a predetermined data amount, to divide data into plural portions such that a leading data portion is sent to a designated recipient whereas the remaining data portions are sent to an alternative recipient.

If the designated file does not exist, error processing is carried out (block 479). Further, if the above described mail keywords are not detected, and if another mail keyword is detected, any adequate processing adapted for the type of the detected mail keyword is carried out (block 473).

In the preferred embodiment of this invention, files created at the proxy server 200 are used by the application program 230. In so doing, a user is allowed to control a program to be executed on a remotely located terminal by making use of E-mails.

### Advantages of the Invention

As described above, in accordance with this invention, it is possible to provide a system that is capable of automatically generating a file on another terminal at a remote location by solely using the presently installed E-mail system, even where a sending remote terminal is unable to handle a file.

In accordance with one aspect of this invention, it is possible to provide a system that is capable of obtaining a file on another terminal (information processing apparatus) at a remote location by solely using the presently installed E-mail system, even where a sending/receiving terminal is unable to handle a file.

In accordance with another aspect of this invention, it is possible to provide a system that is capable of automatically generating a file on another terminal at a remote location, even where a sending terminal is provided with a small storage capacity.

In accordance with another aspect of this invention, it is possible to provide a system that is capable of obtaining a file on another terminal at a remote location, even where a sending/receiving terminal is provided with a small storage capacity.

In accordance with another aspect of this invention, it is possible to provide a system that, in case of controlling a file at a remote location, reduces inputs required at a remote terminal.

In accordance with another aspect of this invention, it is possible to provide a system that reduces amounts of data to be communicated between a sending terminal and a receiving terminal.

In accordance with another aspect of this invention, it is possible to provide a system that eliminates operator's efforts at a remotely located terminal.

In accordance with another aspect of this invention, it is possible to provide a remote operation system that, in case of remotely operating a terminal at a remote location, is capable of performing a variety of remote operations desired by a user.

In accordance with another aspect of this invention, it is possible to provide a remote operation system that, in case of remotely operating a terminal at a remote location, is capable of dynamically modifying and executing remote operations currently desired by a user.

In accordance with another aspect of this invention, it is possible to provide a system that automatically generates a file on another terminal at a remote location by solely using the presently available generic E-mail system rather than any special software.

In accordance with another aspect of this invention, it is possible provide a system that obtaining a file on another terminal at a remote location by solely using the presently available generic E-mail system rather than any special software.

In accordance with another aspect of this invention, it is possible to provide a system that automatically generates a file on another terminal at a remote location without recourse to a platform of a remote terminal for originating a processing request.

In accordance with another aspect of this invention, it is possible to provide a system that obtains a file on another terminal at a remote location without recourse to a platform of a remote terminal for originating a processing request.

## Claims

1. A method in an information processing apparatus connected to a network, of processing a file based on a received electronic mail, the method comprising the steps of:
(a) recognizing arrival of said electronic mail at said information processing apparatus;
(b) analyzing said electronic mail for specifying a file name and file contents data identified by a file generating keyword; and
(c) performing a file operation on a file having said specified file name as its file name.

2. A method as claimed in claim 1 wherein said file operation comprises one or more of the following:
(i) saving a file having said specified file contents data as its contents and said specified file name as its file name;
(ii) generating a file having said specified file contents data as its contents and said specified file name as its file name, and executing said application program by using said generated file;
(iii) searching for a file corresponding with said file name, and adding said file contents data to said searched file;
(iv) deleting a file corresponding with said specified file name; and
(v) generating an electronic mail containing at least a portion of data in a file which corresponds with said searched file name, and sending said generated electronic mail.

3. An information processing apparatus connected to a network for processing a file based on a received electronic mail, comprising:
(a) electronic mail recognition means for recognizing arrival of said electronic mail at said information processing apparatus; and
(b) mail interpreter means for analyzing said electronic mail to specify a file name and file contents data identified by a file generating keyword, and for saving a file having said specified file contents data as its contents and said specified file name as its file name;
(c) means for performing a file operation on a file having said specified file name as its file name.

4. Apparatus as claimed in claim 3 wherein said means for performing comprises one or more of the following
i) means for saving a file having said specified file contents data as its contents and said specified file name as its file name;
ii) means for generating a file having said specified file contents data as its contents and said specified file name as its file name, and program execution means for executing said application program by using said generated file;
iii) means for searching for a file corresponding with said file name, and for adding said file contents data to said searched file;
iv) means for deleting a file corresponding with said specified file name; and
v) means for searching for a file corresponding with said specified file name, wherein said mail processing means generates an electronic mail containing at least a portion of data in a file which corresponds with said searched file name, and sends said generated electronic mail.

5. A storage medium for storing an information processing program executable in an information processing apparatus which is connected to a network for processing a file based on a received electronic mail, the information processing program comprising:
(a) program code for causing said information processing apparatus to recognize arrival of said electronic mail at said information processing apparatus;
(b) program code for causing said information processing apparatus to specify a file name and file contents data identified by a file generating keyword; and
(c) program code for causing said information processing apparatus to perform a file operation on a file having said specified file name as its file name.

6. A storage medium as claimed in claim 5 wherein said program code for causing said information processing apparatus to perform a file operation comprises one or more of the following:
program code for causing said information processing apparatus to save a file having said specified file contents data as its contents and said specified file name as its file name;
program code for causing said information processing apparatus to generate a file having said specified file contents data as its contents and said specified file name as its file name for causing said information processing apparatus to execute said application program by using said generated file;
program code for causing said information processing apparatus to search for a file corresponding with said file name, program code for causing said information processing apparatus to add said file contents data to said searched file;
program code for causing said information processing apparatus to delete a file corresponding with said specified file name; and
program code for causing said information processing apparatus to search for a file corresponding with said file name, for causing said information processing apparatus to generate an electronic mail containing at least a portion of data in a file which corresponds with said searched file name, and for causing said information processing apparatus to send said generated electronic mail.
